# DEMANDE DE BREVET EUROPEEN

(11) **EP 3 892 548 A1**
(43) Date de publication de la demande: **13.10.2021**
(21) Numéro de dépôt: 21166843.9
(22) Date de dépôt: 02.04.2021
(51) Int. Cl.: B64F 1/00, B64F 1/32, E04H 3/04, B64C 39/02, G06Q 10/08, B64F 1/31

(54) **BATIMENT URBAIN ADAPTE AUX DRONES AERIENS DE TRANSPORT DE PASSAGERS ET DE COLIS**

(30) Priorité: 10.04.2020 FR 2003652
(71) Demandeur: Aqprim, 33300 Bordeaux (FR)
(72) Inventeur: MATHIOLON, Laurent, 33300 BORDEAUX (FR); GUERIN, Henri, 33200 BORDEAUX (FR)
(74) Mandataire: Ipside

(57) **Abrégé**

Bâtiment (100) urbain à plusieurs étages surmonté d'un toit (60) et comportant, installées sur le toit, au moins une plateforme (10) de décollage et d'atterrissage d'aéronefs (200) de transport de passagers et une porte d'embarquement (20) permettant aux passagers d'accéder à ladite plateforme, la plateforme (10) étant surélevée par rapport à une surface du toit de sorte à définir un trou d'air (12), ledit bâtiment comportant un système de traitement de colis (30) coopérant avec des véhicules aériens autonomes (300) de transport de colis, ledit système comprenant une borne de distribution automatique (35) permettant le retrait de colis livrés par lesdits véhicules.

## Description

### DOMAINE TECHNIQUE

La présente invention appartient au domaine de la mobilité aérienne urbaine UAM *(Urban Air Mobility),* notamment des infrastructures dédiées à ce mode de transport aérien, et concerne plus particulièrement un bâtiment, tel qu'un immeuble, adapté aux drones aériens de transport de passagers (taxis aériens) et de colis.

L'invention concerne également un réseau urbain comprenant de tels bâtiments.

### ÉTAT DE L'ART

Les concepts de transport urbain par les airs furent longtemps réservés aux récits de science-fiction. La « voiture volante », parcourant des couloirs aériens au-dessus des voies, en est une représentation fréquente. L'avènement des véhicules aériens autonomes, communément appelés drones, dont les technologies liées aux applications civiles sont maitrisées, a désormais permis d'envisager cette voie alternative de transport pour répondre, dans un futur très proche, à une saturation du trafic routier causée par la densité croissante de population, surtout dans les grandes métropoles, qui se traduit par un encombrement des voies au sol et donc un ralentissement de nombreuses activités humaines.

De ce constat, est né le domaine de la mobilité aérienne urbaine UAM qui compte actuellement des projets d'envergure dont certains ont franchi les phases de test et de validation, et s'apprêtent à être déployés prochainement sous réserve d'établissement d'un cadre réglementaire bien défini. Parmi les axes de la mobilité aérienne urbaine, seuls le transport de passagers (individuel et en commun) et le transport de colis par drone retiendront notre attention.

La NASA (administration nationale américaine de l'aéronautique et de l'espace) a publié un rapport en novembre 2018 intitulé « *Urban Air Mobility (UAM) Market Study* » portant sur les trois axes principaux de la mobilité aérienne urbaine, à savoir le transport individuel (taxi aérien), le transport en commun (métro aérien) et le transport de colis. Les deux premiers axes ne présentent pas de différence majeure en termes d'aéronefs et de technologie, mais nécessitent chacun une organisation logistique particulière (choix des trajets, itinéraires, horaires, etc.).

La mise en place de solutions de mobilité aérienne urbaine nécessite des infrastructures adaptées. Ces infrastructures, qui peuvent être indépendantes ou associées à des bâtiments existants dont la fonction principale n'est pas la mobilité aérienne, comprennent principalement des plateformes d'atterrissage et de décollage, telles que des héliports, des hélistations, des vertiports ou des « skyports », et des moyens d'accès à ces plateformes. Les solutions existantes concernent en premier lieu le transport par hélicoptère et sont exclusivement réservées aux usages privés, à la sécurité et aux évacuations sanitaires.

Toutefois, les concepts de mobilité aérienne urbaine ont apporté quelques alternatives en termes d'infrastructures, plus adaptées au transport par drone.

Par exemple, le document WO2019020162A1 divulgue une installation permettant le décollage et l'atterrissage d'aéronefs de transport de passagers, en particulier d'aéronefs multi-rotors à décollage et atterrissage vertical, comprenant au moins une plateforme et une structure portante supportant ladite plateforme. La structure portante est réalisée de sorte que l'installation de décollage et d'atterrissage soit au-dessus d'infrastructures de trafic existantes, telles que les rues, les parcs de stationnement, les lignes de chemins de fer, et/ou au-dessus de superstructures existantes telles que les immeubles.

Cette solution constitue donc un module indépendant qui n'est pas directement intégré à un bâtiment, autrement dit la plateforme n'est pas construite directement sur le toit d'un bâtiment urbain tel qu'un immeuble. Par conséquent, elle présente un certain encombrement, en particulier au sol, modifie le paysage urbain et, lorsqu'elle est placée à cheval sur un immeuble d'habitation, peut gêner les habitants, voire altérer l'exposition des appartements en vis-à-vis des éléments de la structure portante de la plateforme. De plus, lorsqu'il s'agit de la placer au-dessus d'immeubles hauts de type gratte-ciels, cette installation devient extrêmement contraignante, à la fois techniquement et financièrement, et nécessite la mise en place d'une structure portante aussi haute que l'immeuble en question, sans oublier l'ascenseur devant emmener les passager sur la plateforme.

Les autres solutions imaginées par des acteurs majeurs de l'aéronautique, comme celle décrite dans le document JP2013203394A, reprennent simplement le principe de l'héliport et l'agrémentent de quelques servitudes en plus dédiées aux drones (bornes de recharge, espace de stockage, et autres). Cependant, les plateformes prévues sont installées à même la surface extérieure qui les reçoit (toiture ou autre) et ne sont pas optimisées pour limiter les turbulences générées par l'écoulement d'air à leur niveau. Par conséquent, le vol de certains aéronefs légers peut être perturbé au voisinage de la plateforme par le vent, surtout lorsque les conditions météorologiques ne sont pas optimales.

En ce qui concerne la livraison de colis par drones, des solutions existent, comme celle divulguée dans le document US2017175413A1, mais se caractérisent souvent par un aspect logistique complexe nécessitant la réquisition de tout le bâtiment. De plus, ces solutions font intervenir des intermédiaires de livraison et ne permettent pas au client final de venir chercher son colis directement.

### PRÉSENTATION DE L'INVENTION

La présente invention vise à pallier les inconvénients de l'art antérieur ci-dessus exposés, en particulier l'absence de bâtiments urbains adaptés à la mobilité aérienne à la fois de passagers et de colis, comportant des installations performantes et efficaces de gestion du vol des drones et d'acheminement des colis.

À cet effet, la présente invention a pour objet un bâtiment urbain à plusieurs étages surmonté d'un toit et comportant, installée sur le toit, au moins une plateforme de décollage et d'atterrissage d'aéronefs. Ce bâtiment est remarquable en ce que la plateforme est surélevée par rapport à une surface du toit de sorte à définir un trou d'air, et en ce qu'il comporte un système de traitement de colis coopérant avec des véhicules aériens autonomes de transport de colis, ledit système comprenant une borne de distribution automatique permettant le retrait de colis livrés par lesdits véhicules.

Plus particulièrement, la plateforme est apte à recevoir des aéronefs de transport de passagers, le bâtiment comportant une porte d'embarquement permettant aux passagers d'accéder à ladite plateforme.

Avantageusement, la plateforme est supportée par des montants espacés et présentant une hauteur suffisante pour que les turbulences formées par l'écoulement d'air au niveau de la plateforme soient contenues, en majeure partie, dans le trou d'air.

Selon un mode de réalisation avantageux, la porte d'embarquement est reliée à un accès secondaire sécurisé, différent d'un accès principal dudit bâtiment, via un moyen de déplacement vertical tel qu'un ascenseur et/ou une cage d'escalier, ladite porte permettant également le débarquement de passagers atterrissant sur la plateforme.

Selon un mode de réalisation particulier, le système de traitement de colis comprend des moyens de convoyage, tels que des convoyeurs à bande et des élévateurs, des moyens de tri automatique, tels que des robots à bras articulé de préhension, et des moyens de stockage, tels qu'une armoire à cases, aptes à acheminer les colis livrés sur le toit par les véhicules aériens autonomes jusqu'à la borne de distribution automatique.

Alternativement, les moyens de convoyage, les moyens de tri automatique et les moyens de stockage sont également aptes à acheminer des colis déposés par des utilisateurs à la borne de distribution automatique jusqu'au toit pour que lesdits colis soient prélevés par les véhicules aériens autonomes et transportés à leurs destinations.

Selon un mode de réalisation avantageux, la borne de distribution automatique dispose soit d'une seule case de retrait de colis et d'une seule case de dépôt de colis, soit d'une seule case commune.

Avantageusement, le bâtiment comporte en outre au moins une borne de recharge électrique, placée au voisinage de la plateforme, adaptée à des aéronefs à propulsion électrique ou hybride. Cette borne de recharge peut être reliée à différentes sources d'énergie électrique, stockable et non stockable.

Plus particulièrement, le bâtiment comporte en outre un local technique installé sur le toit, permettant de stocker au moins un aéronef atterrissant sur ledit toit jusqu'à son prochain décollage, les bornes de recharge peuvent ainsi être placées à l'intérieur de ce local.

Dans le cadre de la mobilité aérienne urbaine, le bâtiment est un immeuble assurant une ou plusieurs fonctions parmi des fonctions résidentielles, commerciales et/ou financières, administratives, médicales et/ou hospitalières, d'enseignement et/ou de recherche, de loisir, et toute autre fonction (ou destination) au sens du droit de l'urbanisme.

La présente invention concerne également un milieu urbain, tel qu'une métropole, comportant au moins un bâtiment regroupant un ensemble de caractéristiques parmi les caractéristiques précitées.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un bâtiment urbain conforme aux principes de l'invention.

### BRÈVE DESCRIPTION DES FIGURES

Les figures sont données à titre purement illustratif pour l'intelligence de l'invention et ne limitent pas la portée de celle-ci. Les différents éléments représentés ne sont pas nécessairement à la même échelle. Sur l'ensemble des figures, les éléments identiques ou équivalents portent la même référence numérique.

Il est ainsi illustré en :
- Figure 1 : une vue d'artiste d'un milieu urbain, avec un bâtiment selon l'invention, survolé par un drone de transport de passager et un drone de transport de colis ;
- Figure 2 : une vue en perspective d'un bâtiment de type immeuble selon un mode de réalisation de l'invention ;
- Figure 3 : des exemples de drones, de transport de passager (a) et de transport de colis (b) ;
- Figure 4 : une représentation schématique d'un écoulement d'air sur un bâtiment de l'art antérieur (a) et sur un bâtiment selon l'invention (b), avec la plateforme surélevée ;
- Figure 5 : des exemples de plateformes de décollage et d'atterrissage de formes variées ;
- Figure 6 : une vue de dessus d'un bâtiment selon un autre mode de réalisation de l'invention ;
- Figure 7 : une vue schématique du système de traitement de colis selon un mode de réalisation de l'invention ;
- Figure 8 : une représentation schématique d'un milieu urbain de type métropole comprenant des bâtiments selon l'invention.

### DESCRIPTION DÉTAILLÉE DE MODES DE RÉALISATION

Il convient de noter au préalable que certains dispositifs et systèmes bien connus sont ici décrits et expliqués pour éviter toute insuffisance ou ambiguïté dans la compréhension de la présente invention.

Dans le mode de réalisation décrit ci-après, on fait référence à un bâtiment de type immeuble adapté aux drones aériens, destiné principalement à une implantation dans un environnement urbain tel qu'une métropole. Cet exemple, non limitatif, est donné pour une meilleure compréhension de l'invention et n'exclut pas des applications dans un environnement industriel ou hybride tel que les technopoles, qui sont des milieux urbains regroupant des activités technologiques nécessitant une mobilité humaine accrue ainsi qu'un service de livraison efficace.

Dans la suite de la description, le terme « drone » désigne par extension un drone aérien, ou véhicule aérien autonome UAV *(Unmanned Aerial Vehicle*), pour le transport de passagers et/ou de colis.

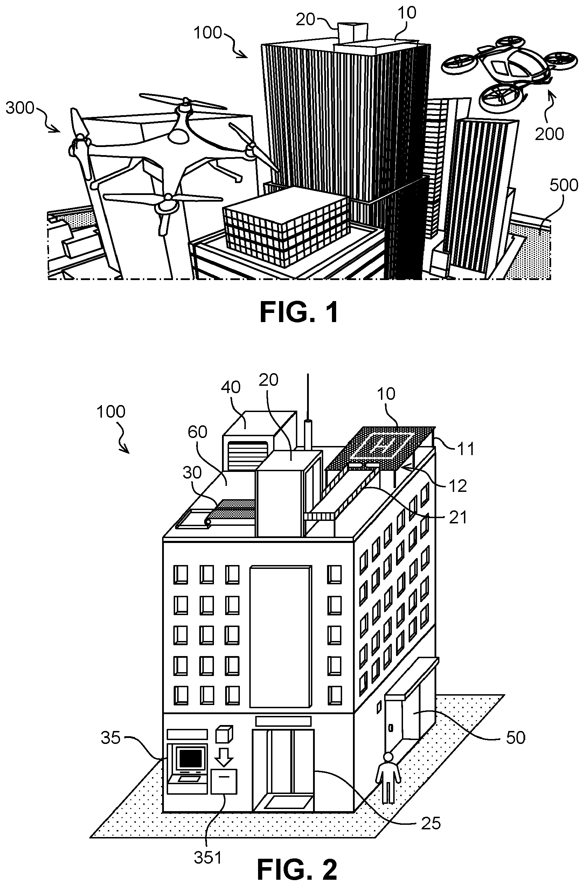

La figure 1 représente en vue d'artiste un environnement urbain survolé par des drones 200 et 300. Un tel environnement correspond par exemple à un quartier avec une forte densité d'immeubles de hauteur importante (gratte-ciels) tel qu'un quartier d'affaires, dans lequel l'activité humaine est importante et nécessite des solutions alternatives de mobilité au vu de la place restreinte sur les voies et chaussées 500.

La figure 2 représente schématiquement un bâtiment 100, selon un mode de réalisation de l'invention, adapté aux drones et à la mobilité aérienne urbaine et comportant principalement une plateforme 10 de décollage et d'atterrissage, ci-après la plateforme, une porte d'embarquement/débarquement 20, un accès 25 à ladite porte depuis l'extérieur du bâtiment, un système de traitement de colis 30, une borne d'envoi/réception de colis 35, directement reliée au système de traitement de colis, un local technique 40, ainsi que d'autres installations utilitaires détaillées plus loin. Outre les éléments précités, qui sont en lien direct avec l'invention, le bâtiment 100 comporte des éléments architecturaux intrinsèques tels qu'une entrée principale 50 et un toit 60.

La plateforme 10 est adaptée aux drones civiles, qui sont en général des aéronefs à décollage et atterrissage vertical VTOL *(Vertical Take-off and Landing),* tels que les multi-rotors, et présente donc des dimensions réduites dans un plan horizontal, en respectant bien entendu les exigences réglementaires de sécurité aérienne.

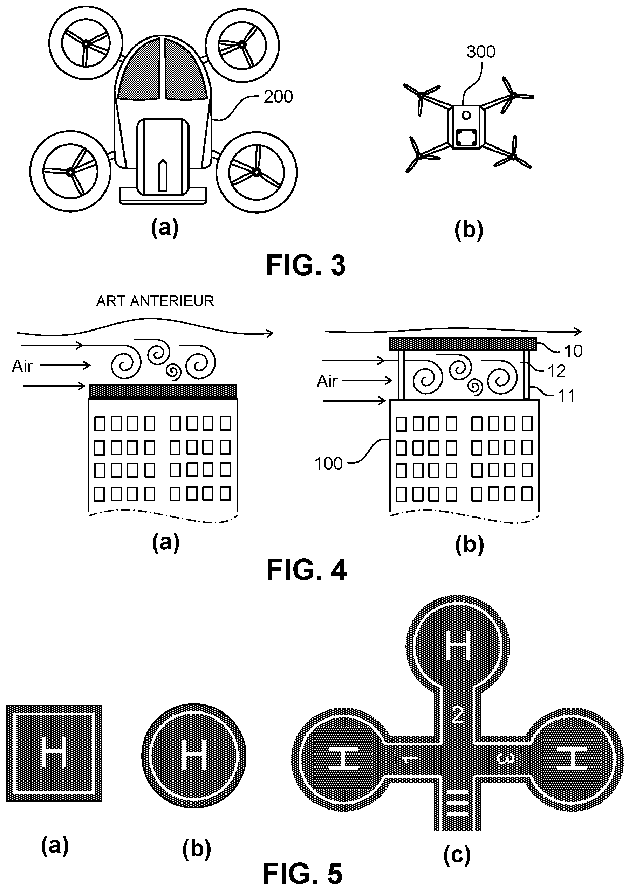

La figure 3 représente un exemple de drone de transport de passagers 200 en (a), communément appelé taxi aérien, et un exemple de drone de transport de colis 300 en (b).

La plateforme 10 repose sur le toit 60 de l'immeuble 100, en étant surélevée par rapport à la surface du toit qu'elle couvre, supportée par des montants 11 espacés de sorte à définir un trou d'air 12 limitant les turbulences au niveau de la zone de décollage et d'atterrissage des drones. Ainsi, les turbulences aérodynamiques créées par l'immeuble en tant qu'obstacle à l'écoulement d'air restent concentrées au-dessous de la plateforme 10 et l'écoulement d'air au-dessus de ladite plateforme reste sensiblement laminaire, pour une perturbation moindre du vol des drones y décollant et y atterrissant.

La figure 4 permet de comprendre l'avantage aérodynamique apporté par la surélévation de la plateforme 10 sur un bâtiment 100 selon l'invention, par rapport aux solutions de l'art antérieur dans lesquelles la plateforme (héliport, vertiport ou autre) n'est pas surélevée. En effet, dans la configuration (a), la plateforme de décollage et d'atterrissage repose à même le toit du bâtiment, ou tout au plus avec un léger écart dont les effets aérodynamiques sont négligeables. Cela correspond habituellement à une plateforme réalisée directement sur la surface du toit ou légèrement surélevée sans dépasser le niveau de la bordure du toit. Ainsi, l'écoulement d'air s'accompagne d'un décollement de couche limite au niveau de la face supérieure de la plateforme de sorte que les tourbillons sont formés dans une zone critique de décollage et d'atterrissage. À l'inverse, dans la configuration (b), la plateforme 10 est surélevée, grâce aux montants 11, afin de créer un trou d'air entre le toit du bâtiment et ladite plateforme, destiné à contenir les tourbillons générés par l'écoulement d'air, et donc limiter les turbulences dans la zone critique de décollage et d'atterrissage. Une analogie peut être faite avec des dispositifs de performance aérodynamique tels que les ailerons placés à l'arrière de certains véhicules automobiles.

Lors de la conception du bâtiment 100, l'écoulement d'air autour de la plateforme 10 peut être simulé au moyen d'un outil de simulation numérique, par exemple par une méthode de mécanique des fluides numérique CFD *(Computational Fluid Dynamics),* afin de déterminer la hauteur à laquelle sera placée ladite plateforme, hauteur du trou d'air, qui respecte un compromis entre la diminution des turbulences et le positionnement de la plateforme en vue d'avoir un accès facilité non contraignant en termes de construction et d'installations.

Toutefois, il convient de noter qu'il faut chercher à réduire les turbulences au-dessus de la plateforme dans des conditions météorologiques normales sans se préoccuper des conditions les plus défavorables (rafales puissantes et orages) dans lesquelles les vols seraient interdits *de facto.* En outre, la hauteur du trou d'air est calculée en fonction d'une vitesse moyenne du vent. Or, la vitesse du vent augmente avec l'altitude (peut être approximée par une loi logarithmique) et donc avec la hauteur du bâtiment. Par conséquent, plus le bâtiment 100 est haut plus la plateforme 10 est surélevée par rapport au toit 60.

La plateforme 10 peut présenter une forme en plan quelconque, simple ou composée, pour s'accorder au mieux avec l'architecture du bâtiment 100 et l'usage qui en sera fait du point de vue du trafic de drones. La figure 5 donne quelques exemples de formes possibles, simples : rectangulaire en (a) et circulaire en (b), et composée : en trèfle sur la variante (c), cette dernière étant plus adaptée à recevoir plusieurs drones en même temps et dispose à cet effet de plusieurs emplacements. Bien entendu, la plateforme 10 peut être de forme simple, rectangulaire par exemple, mais disposer de plusieurs emplacements délimités par un marquage spécifique peint à même sa surface. Ainsi, la plateforme 10 peut occuper une superficie plus ou moins étendue sur le toit du bâtiment. Néanmoins, il faut garder à l'esprit que la surélévation de la plateforme implique des contraintes mécaniques liées, d'une part, au poids des drones qu'elle peut simultanément supporter ainsi que son propre poids et, d'autre part, à l'action du vent sur les faces supérieure et inférieure de ladite plateforme. De ce fait, plus grande sera la plateforme plus critique sera la prise en compte des contraintes précitées dans le dimensionnement des éléments de la plateforme, à savoir les montants 11, les matériaux utilisés, etc. De préférence, en tant que de besoin, plusieurs plateformes « mono-drone » seront privilégiées à une seule plateforme « poly-drones ».

La plateforme 10 peut être construite en suivant des techniques bien connues de réalisation de structures sur toits d'immeubles telles que les héliports, la surface de réception des drones présente un revêtement dont la nature et l'épaisseur dépendent des drones que la plateforme est destinée à recevoir ainsi que de la fréquence de mouvements visée, un mouvement étant un décollage et un atterrissage dans le jargon du transport aérien.

Les montants 11 sont par exemple de simples poutres cylindriques agencées au niveau du bord de la plateforme 10 et travaillant essentiellement en compression en raison de la verticalité des décollages et atterrissages effectués sur ladite plateforme. Des montants « d'appoint » peuvent être prévus et placés sous la partie centrale de la plateforme 10 pour une meilleure résistance mécanique.

De façon alternative, la plateforme 10 peut reposer sur un autre type de structure à condition d'avoir un aspect lacunaire lui permettant de préserver le trou d'air entre le toit et la plateforme.

L'accès à la plateforme 10 s'effectue via la porte d'embarquement 20, qui permet aussi le débarquement de passagers atterrissant sur ladite plateforme.

La porte d'embarquement/débarquement 20, selon l'exemple de réalisation illustré, est située sur le toit 60 de l'immeuble 100 et permet aux passagers d'accéder directement à la plateforme 10 en empruntant par exemple une passerelle 21, sensiblement horizontale ou en rampe, de préférence horizontale et placée au même plan que la plateforme. En raison de la surélévation de la plateforme 10, la passerelle 21 est pourvue d'une barrière de protection, telle qu'un garde-corps, pour la sécurité des passagers. De plus, la passerelle 21 peut être couverte, voire fermée, afin de protéger les passagers des effets indésirables de la météo.

Il convient de noter que la passerelle 21 est accessoire et que dans d'autres modes de réalisation la porte 20 donne directement soit sur la plateforme, lorsque celle-ci occupe une majeure partie de la surface du toit par exemple, soit sur le toit, auquel cas les passagers traversent le toit et accèdent à la plateforme surélevée par un escalier ou des marches. Cependant, pour des raisons de sécurité, le libre accès des passagers au toit doit être limité, et les solutions interdisant cet accès seront préférées.

En outre, la plateforme 10 doit être équipée de moyens d'accessibilité pour personnes à mobilité réduite. Plus généralement, l'ensemble des installations prévues dans le cadre de l'invention doit être adapté à la circulation autonome des personnes à mobilité réduite.

La porte d'embarquement 20 communique avec l'accès sécurisé 25, qui peut être situé au rez-de-chaussée ou à un étage supérieur, par l'intermédiaire d'un moyen de déplacement en hauteur, tel qu'une cage d'escalier et/ou un ascenseur, reliant verticalement ledit accès à la porte d'embarquement située au niveau du toit 60 de l'immeuble 100. De préférence, la cage d'escalier et/ou l'ascenseur servant à relier l'accès 25 à la porte d'embarquement 20 sont intérieurs et isolés des parties communes utilisées pas les occupants de l'immeuble 100 (résidants, employés, visiteurs, etc.).

Entre l'accès sécurisé 25 et la porte d'embarquement 20, il peut être prévu un espace d'embarquement dans lequel les passagers peuvent attendre leurs vols. Cet espace peut disposer de moyens de détente, de restauration, etc., et être situé à un étage inférieur, à proximité de la plateforme 10, ou directement sur le toit, en mode « rooftop », lorsque l'immeuble le permet.

Une des spécificités de la présente invention est de pouvoir intégrer une infrastructure de mobilité aérienne urbaine à un immeuble commun, assurant des fonctions résidentielles, commerciales, administratives, hospitalières et analogues, sans gêner les occupants permanents ou temporaires dudit immeuble. À cet effet, les moyens d'accès à la plateforme 10, à savoir l'accès secondaire 25 et la porte d'embarquement 20, sont complètement dissociés du reste de l'immeuble de sorte que les parcours des utilisateurs du taxi aérien, et des techniciens d'intervention, ne croisent pas ceux des occupants de l'immeuble.

Cela s'applique également au circuit de traitement du colis entre la borne de distribution 35 et le système de gestion 30.

Le système de gestion de colis 30 permet de recevoir des colis livrés par drone, de les trier, de les stocker et de les mettre à disposition du client final ou d'un intermédiaire de distribution via la borne de distribution 35, ces opérations étant automatisées et pilotées selon les règles de l'art. Le système de gestion de colis 30 peut également servir à l'envoi de colis préalablement préparés et présentés aux drones qui se chargeront de leur transport.

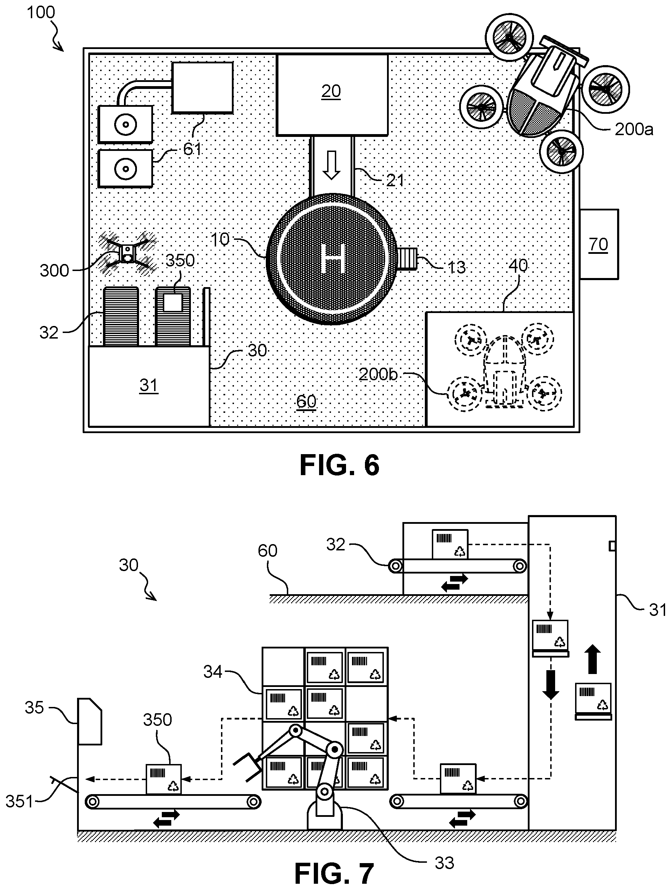

Dans l'exemple de réalisation de la figure 2, les colis et les passagers transitent par la même structure qui abrite à la fois une partie réservée à la porte d'embarquement 20 et une partie réservée aux colis, telle qu'un élévateur ou un monte-charge. Au contraire, dans l'exemple de réalisation de la figure 6, ces deux fonctions sont séparées et les colis 350 transitent par une structure 31 adaptée.

De préférence, le système de gestion de colis 30 est entièrement automatisé et comporte à cet effet des unités spécifiques d'acheminement, de tri et de stockage pourvue chacune des servitudes (électromécaniques, informatiques, etc.) nécessaires à la réalisation des opérations y afférentes. À titre d'exemple, l'acheminement peut, lors des phases d'interaction avec le drone, être réalisé au moyen de convoyeurs 32, de type tapis-roulant, dotés de capteurs de pression et/ou de capteurs optiques conditionnant leur mouvement. Ainsi le convoyeur d'envoi s'arrête lorsqu'un colis 350 préparé pour l'envoi arrive à l'extrémité dudit convoyeur, jusqu'à ce que ledit colis soit prélevé par le drone 300. Les unités de tri et de stockage des colis, non représentées, peuvent être conçues pour mettre en œuvre différentes méthodes de tri automatique de colis et coopérer avec des espaces de stockage dédiés ménagés dans l'immeuble 100. Par exemple, un espace de stockage peut être situé derrière la borne de distribution 35 en aval de lignes de tri qui permettent de ranger les colis par code barre dans des casiers.

La figure 7 représente schématiquement le système de gestion de colis 30 ainsi que sa borne de distribution automatique 35 selon un exemple de réalisation de l'invention, dans lequel ledit système est apte à traiter des colis aussi bien en réception (livraison par drone sur le toit et réception à la borne) qu'en envoi (dépôt à la borne et transport par drone). Les deux modes fonctionnent de manière similaire. En effet, les drones livrent les colis 350 sur le convoyeur 32 de réception, ce dernier les achemine jusqu'à un moyen de transport vertical 31, tel qu'un élévateur, qui s'occupe ensuite de les remettre sur un convoyeur de l'unité de tri. L'unité de tri comporte principalement un effecteur robotisé 33, de type bras articulé de préhension, permettant de saisir chaque colis et de le stocker dans un casier disponible d'un espace de stockage 34, tout en mémorisant l'emplacement de chaque colis en fonction d'une information de reconnaissance dudit colis, telle qu'un code barre, un code QR, un numéro, un identifiant ou assimilés, dont l'acquisition se fait par des moyens optiques et/ou de communication radio comme l'identification radio (RFID), la communication en champ proche (NFC), etc. Ainsi, lorsque le destinataire d'un colis 350 transmet sa requête de livraison sur la borne 35, le robot 33 se charge de récupérer ledit colis, dont l'emplacement a été enregistré au préalable lors du stockage, et de le poser sur un dernier convoyeur qui l'achemine jusqu' à un emplacement de retrait 351 tel qu'une trappe s'ouvrant automatiquement à l'arrivée du colis.

En mode « envoi », le parcours du colis est effectué en sens inverse entre le dépôt effectué au niveau de la borne 35 par un utilisateur et le convoyeur d'envoi situé sur le toit 60 de l'immeuble.

Ainsi, la présente invention apporte un avantage considérable par rapport aux solutions de l'art antérieur en permettant des retraits et des dépôts de colis via un unique emplacement, la borne de distribution, à l'image des distributeurs automatiques de billets bancaires dont l'usage est bien ancré.

Le bâtiment 100 dispose ainsi de deux services de mobilité aérienne urbaine, le transport de passager et le transport de colis, tout en étant essentiellement destiné à des fonctions « habituelles » (logements, bureaux, commerces, etc.).

Le local technique 40 selon l'invention peut remplir différentes fonctions en lien avec les drones opérant sur l'immeuble 100. De préférence, le local technique 40 est équipé de bornes de recharge électriques et présente un volume suffisant pour stocker un ou plusieurs drones. Le local 40 peut également accueillir un bureau qui serait mis à disposition du personnel de maintenance des installations de transport aérien.

Le bâtiment 100 peut également comporter des bornes de recharge électrique des drones en dehors du local technique 40, sur le toit 60. Ces bornes sont reliées à une plusieurs sources d'énergie électrique stockable ou non stockable. Les sources possibles sont par exemple : le réseau électrique, des batteries rechargeables, des piles à hydrogène et des panneaux photovoltaïques.

La plateforme 10, la porte d'embarquement 20, une partie du système de gestion de colis 30 et le local technique 40 sont situés sur le toit 60 du bâtiment 100, tandis que l'accès 25 et la borne de distribution de colis 35 sont situés au rez-de-chaussée, directement sur la voie, ou à un étage supérieur accessible aux usagers du transport aérien. Ainsi, l'agencement architectural des éléments précités peut être réalisé de différentes manières.

La figure 6 illustre un exemple d'agencement des éléments situés sur le toit 60 du bâtiment 100. Dans cet exemple, la plateforme 10 circulaire est placée sensiblement au centre du toit en étant accessible via la passerelle 21 qui se prolonge en ligne droite jusqu'à la porte d'embarquement 20 accolée à un bord du toit. Ce bord correspond par exemple à la façade recevant l'accès 25. La partie « émergente » du système de gestion de colis 30 et le local technique 40 sont placés chacun à un angle du bord opposé au bord précédent. Ainsi, les éléments du transport aérien restent écartés des équipements 61 du toit 60. De plus, l'emplacement de ces éléments, surtout ceux présentant une hauteur importante, doit laisser un champ dégagé entre la plateforme 10 et les bords du toit 60, au moins suivant une direction de décollage et d'atterrissage comme celle du drone 200a sur la figure 6, pour ne pas gêner des approches en pilotage « bas » que peuvent adopter les pilotes dans le cas de véhicules pilotés (hélicoptères ou autres). Rappelons que l'invention ne concerne pas exclusivement les drones, et que la taille de la plateforme 10 et, par là-même, de l'immeuble 100 déterminera sa capacité à recevoir de plus grands aéronefs tels que les hélicoptères de secours.

Toujours en référence à la figure 6, la plateforme 10 dispose d'un escalier 13 qui peut servir en cas de panne de l'ascenseur de la porte d'embarquement 20, auquel cas les passagers peuvent sortir de l'immeuble 100 par des escaliers de secours 70 accessibles depuis le toit 60.

Dans un mode de réalisation alternatif, les installations de transport aérien décrites ci-avant peuvent être regroupées dans une extension adossée à un bâtiment existant pour former un bâtiment adapté aux drones selon l'invention. Dans ce cas, le bâtiment adapté comprend un bâtiment préexistant et une annexe pour la mobilité aérienne urbaine.

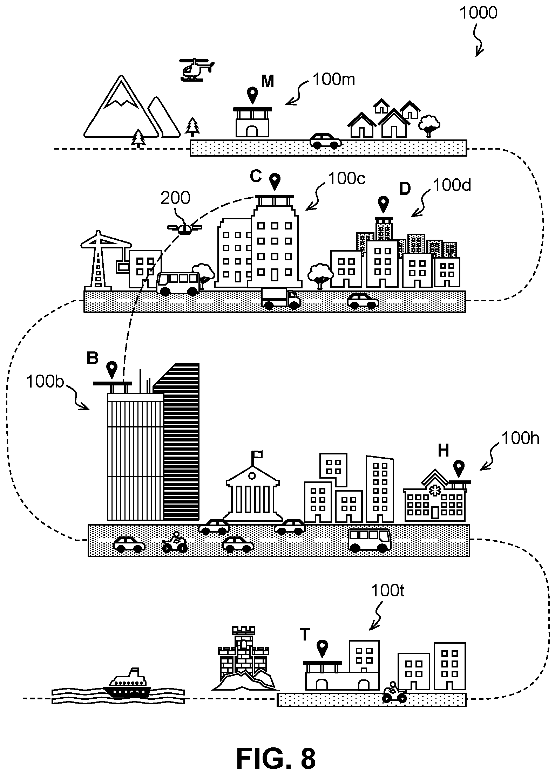

La figure 8 représente schématiquement un milieu urbain, et périurbain, 1000 comprenant plusieurs bâtiments 100 à proximité de grands carrefours d'activité (centres d'affaires, centres touristiques, etc.) et autres hubs de transport (gares, aéroports, etc.) non représentés.

Le milieu 1000 permet ainsi de mettre en œuvre une solution de mobilité aérienne urbaine selon l'invention, dans laquelle les colis sont livrés à différents relais et les passagers peuvent emprunter des drones 200, en mode taxi par exemple, pour parcourir des centres d'intérêts divers tels que : les montages et la compagne M desservies via le bâtiment 100m, faisant office de station, des centres-villes C et D desservis via les immeubles 100c et 100d, un quartier d'affaire B desservi via la tour 100b, un centre hospitalier H desservi par un bâtiment (hôpital) 100h, une zone touristique T desservie par un bâtiment 100t, etc.

Il ressort clairement de la présente description que certains éléments du bâtiment peuvent être réalisés différemment ou remplacés, sans pour autant sortir du cadre de l'invention précisé dans les revendications qui suivent.

## Revendications

1. Bâtiment (100) urbain à plusieurs étages surmonté d'un toit (60) et comportant, installée sur le toit, au moins une plateforme (10) de décollage et d'atterrissage d'aéronefs (200, 300), **caractérisé en ce que** la plateforme (10) est surélevée par rapport à une surface du toit de sorte à définir un trou d'air (12), et **en ce qu'**il comporte un système de traitement de colis (30) coopérant avec des véhicules aériens autonomes (300) de transport de colis, ledit système comprenant une borne de distribution automatique (35) permettant le retrait de colis livrés par lesdits véhicules.

2. Bâtiment selon la revendication 1, dans lequel la plateforme (10) est apte à recevoir des aéronefs (200) de transport de passagers, ledit bâtiment comportant une porte d'embarquement (20) permettant aux passagers d'accéder à ladite plateforme.

3. Bâtiment selon l'une des revendications 1 ou 2, dans lequel la plateforme (10) est supportée par des montants (11) espacés et présentant une hauteur suffisante pour que les turbulences formées par l'écoulement d'air au niveau de la plateforme soient contenues, en majeure partie, dans le trou d'air (12).

4. Bâtiment selon la revendication 2, dans lequel la porte d'embarquement (20) est reliée à un accès secondaire (25) sécurisé, différent d'un accès principal (50) dudit bâtiment, via un moyen de déplacement vertical tel qu'un ascenseur, ladite porte permettant également le débarquement de passagers atterrissant sur la plateforme (10).

5. Bâtiment selon l'une quelconque des revendications précédentes, dans lequel le système de traitement de colis (30) comprend des moyens de convoyage (31, 32), des moyens de tri automatique (33) et des moyens de stockage (34), aptes à acheminer les colis livrés sur le toit (60) par les véhicules aériens autonomes (300) jusqu'à la borne de distribution automatique (35).

6. Bâtiment selon la revendication 5, dans lequel les moyens de convoyage (31, 32), les moyens de tri automatique (33) et les moyens de stockage (34) sont également aptes à acheminer des colis déposés par des utilisateurs à la borne de distribution automatique (35) jusqu'au toit (60) pour que lesdits colis soient prélevés par les véhicules aériens autonomes (300) et transportés à leurs destinations.

7. Bâtiment selon l'une quelconque des revendications précédentes, dans lequel la borne de distribution automatique (35) dispose soit d'une seule case (351) de retrait de colis et d'une seule case de dépôt de colis, soit d'une seule case commune.

8. Bâtiment selon l'une quelconque des revendications précédentes, comportant en outre au moins une borne de recharge électrique, placée au voisinage de la plateforme (10), adaptée à des aéronefs (200, 300) à propulsion électrique ou hybride.

9. Bâtiment selon l'une quelconque des revendications précédentes, comportant en outre un local technique (40) sur le toit (60) permettant de stocker au moins un aéronef (200, 300) atterrissant sur ledit toit jusqu'à son prochain décollage.

10. Bâtiment selon l'une quelconque des revendications précédentes, de type immeuble (100) assurant une ou plusieurs fonctions parmi des fonctions résidentielles, commerciales et/ou financières, administratives, médicales et/ou hospitalières, d'enseignement et/ou de recherche, de loisir, et analogues.

11. Milieu urbain (1000), tel qu'une métropole, **caractérisé en ce qu'**il comporte au moins un bâtiment (100) selon l'une quelconque des revendications 1 à 10.
